# EUROPEAN PATENT APPLICATION

(11) **EP 1 039 324 A1**
(43) Date of publication of application: **27.09.2000**
(21) Application number: 99105056.8
(22) Date of filing: 23.03.1999
(51) Int. Cl.: G02B 6/38

(54) **Conductor guiding device for connector plug**

(71) Applicant: W.L. GORE & ASSOCIATES GmbH, 85640 Putzbrunn (DE)
(72) Inventor: Haftmann, Johannes, 91126 Ridnitzhembach (DE)
(74) Representative: Harrison, Robert John

(57) **Abstract**

The patent discloses a ferrule (10) or other conductor guiding device with two guide plates (20a, 20b), i.e. an upper and a lower guide plates. Each guide plate (20a, 20b) has a top surface (25a, 25b) in which are formed a plurality of transmission line grooves (30) for acceptance of signal transmission lines, such as optical fibres, at least one sealing lip (40) and least one sealing groove (50). The sealing groove (50) is separated from the at least one sealing lip (40) by the plurality of transmission line grooves (30). The guide plates (20a, 20b) are so matched such that when the top surfaces of the guide plates (20a, 20b) are placed adjacent - but not in direct contact - to one another the plurality of grooves (30) in the upper guide plate (20a) aligns with the plurality of grooves (30) in the bottom guide plate (20b) and the sealing lip (40) in one of said guide plates (20a, 20b) is accepted by, i.e. fits into, the sealing groove (50) in the other of said guide plates (20a,20b). Preferably the ferrule (10) of the invention has two sealing lips (40) and two sealing grooves (50) separated by the plurality of transmission line grooves (30). The ferrule (10) finds application in a signal transmission system, preferably an optical fibre signal transmission system.

## Description

### Field of the Invention

The invention relates to a guiding device for the conductors in a connector plug and a connection system incorporating the connector plug. Most preferably the guiding device is used in an optical fibre connector plug.

### Prior Art

A multi-fibre optical fibre connector plug is known from European Patent Application EP-A-0 514 722 (NT&T). The ferrule shown in this prior art has a plurality of optical fibres whose endfaces extend beyond a front facet of the ferrule. When two of the said ferrules are placed in contact with each other the endfaces of the optical fibres come into contact with each other such that light waves passing along one optical fibre in one ferrule is transmitted to the corresponding optical fibre in the other ferrule.

A further optical fibre connector plug is shown in US-A-4 973 127 (Cannon et al) assigned to AT&T Bell Laboratories. The ferrules used in the connector plug of this disclosure include a plurality of small fibre grooves for accepting the optical fibres and larger pin grooves for accepting guide pins to join two ferrules together. Furthermore each ferrule includes a nose projecting beyond the front facet of the ferrule for facilitating the connection of the optical fibres to each other. The optical fibre connector plug of US-A-4 973 127 has an upper and lower guide plate which touch each other.

Other optical fibre connectors are known from US-A-3 864 018 (Miller), US-A-4 029 390 (Chinnock et al), US-A-4 279 468 (Turley et al.), US-A-4 657 341 (Sammueller), US-A-4 818 058 (Bonanni), US-A-4 830 456 (Kakii et al.), US-A-3 836 638 (Finzel), US-A-4 865 413 (Hübner et al.), US-A-4 898 449 (Vroomen et al.).

The use of silicon spacer chips for an optical fibre cable connector is disclosed in an article by C. M. Schroeder entitled "Accurate Silicon Spacer Chips for an Optical-Fibre Cable Connector" published in the Bell System Technical Journal, vol. 57, No. 1, January 1978, pp 91-97, and in an article entitled "Low-Loss Multi-fibre Connectors with Plug-Guide Grooved Silicon" by Satake et al. published in Electronics Letters, Oct. 29, 1981, vol. 17, No. 22, pp 828-830.

The use of transfer moulding techniques for the manufacture of splices for optical fibres is acknowledged in the letter entitled "Precisely Moulded Plastic Splices for Optical Fibres" by Kurokawa et al published in Electronics Letters, Nov. 20, 1980, pp 911-912, and in the article entitled "Low-Loss Plastic Moulded Optical Multi-fibre Connector for Ribbon-to Single Fibre Fan-Out" by Satake et al. published in the Journal of Lightwave Technology, vol. LT-3, No. 6, December 1985, pp 1339-1342.

Many of the prior art ferrules use guiding pins to ensure that when the two adjacent ferrules are connected together, their endfaces match. In order to allow the insertion of guiding pins into the ferrules, the ferrules are provided with guiding pin holes to accept the guiding pins. For a ferrule made from a top half (a top guide plate) and a bottom half (a bottom guide plate) adhered to each other, the guiding pin hole is formed from guiding pin grooves constructed in the guide plates. One problem that has been encountered, however, is that on adhesion of the two guide plates to each other, adhesive can flow into the guiding pin grooves and obstruct the entry of guiding pins. Ferrules in which the guiding pin hole is obstructed by adhesive must be thrown away since they cannot be matched to other ferrules in a fibre optic connection system.

Previous attempts at solving this problem had resolved around providing a controlled amount of adhesive which would be adequate to ensure that the two guide plates remain adhered to each other whilst on the other hand being insufficient to for the surplus adhesive to flow into the guiding pin grooves to obstruct them. This requirement is not always achieved during production.

Another solution to the problem would be to mount the guide pin in one of the guide pin grooves prior to the adhesion of the top guide plate to the bottom guide plate. This has, however, the disadvantage that it is not possible to polish the endfaces of the ferrules and thus two ferrules cannot be matched up to each other exactly. In optical fibre connection systems this will lead to losses in light transmission since the ends of the optical fibres will not be exactly matched.

### Summary of the Invention

It is an object of the invention to provide an improved ferrule design particularly for use in optical fibre connection systems.

It is furthermore an object of the invention to reduce the waste during the manufacture of ferrules.

It is furthermore an object of the invention to reduce transmission losses in optical fibre connection systems.

It is more particularly an object of the invention to design the ferrule for use in an optical fibre connection systems such that adhesive is prevented from ingressing into guide pin holes and thus obstructing the insertion of guide pins.

This and other objects of the invention are solved by providing a ferrule having two guide plates (an upper and a lower guide plate). On the top surface of each of the guide plates at least one sealing lip and at least one sealing groove are formed between which are situated a plurality of transmission line grooves in which signal transmission lines (such as optical fibre conductors or copper conductors) are placed. The two guide plates are so matched such that when the top surfaces of the guide plates are placed adjacent to one another, the plurality of grooves in the upper guide plate aligns with the plurality of grooves in the bottom guide plate, and the sealing lip in one of said guide plates is accepted by, i.e. fits into, the sealing groove in the other of said guide plates. The top surfaces of the guide plates do not touch each other except through the co-operation of the sealing lip and the sealing groove. This allows for self-alignment of the guide plates when they are placed adjacent to each other and also compensates for different size transmission lines.

In the most general form of the invention, each guide plate has one sealing lip and one sealing groove. The respective top surfaces of the guide plates are placed adjacent to but not in contact with each other A cavity is thus formed between the sealing lips within the ferrule which can be filled with an adhesive to attach the two guide plates together and affix the signal transmission lines within the ferrule. The sealing lips and the corresponding sealing grooves prevent the outflow of adhesive from the cavity. This creates a ferrule in which low transmission losses are found.

In a preferred embodiment of the invention, each guide plate has two sealing lips and two sealing grooves separated by the plurality of transmission line grooves. The guide plates are therefore identical and can be manufactured in the same mould using substantially the same process conditions. This reduces substantially the tolerances in the system and allows extremely small structures to be created.

Advantageously a guiding pin groove is provided in the top surface to allow a guiding pin to be incorporated into the manufactured ferrule so that two adjacent ferrules can be aligned with each other.

The guide plates of the ferrule can also include a projection and a corresponding receptacle which provide means for aligning the two guide plates to each other.

In a preferred design of the guide plate, the sealing lips are adjacent to the sealing groove and the height of the scaling lip is at least three times the width of the sealing lip. This allows the sealing lip to have a certain degree of flexibility so that when it is fitted into or accepted by the sealing groove, its top can bend on touching the side of the sealing groove. Since the top and the side wall of the sealing groove are then in contact with each, there is no opportunity for the adhesive from within the cavity of the assembled ferrule to flow through the groove to the outside of the ferrule.

Most preferably the guide plates are made of a plastic material which is not brittle and thus leads to more robust ferrules.

The ferrule of the invention can find application in an optical fibre connection system in which a plurality of optical fibres is placed in the transmission line grooves and the optical fibre connector is formed from the ferrule.

### Description of the Drawings

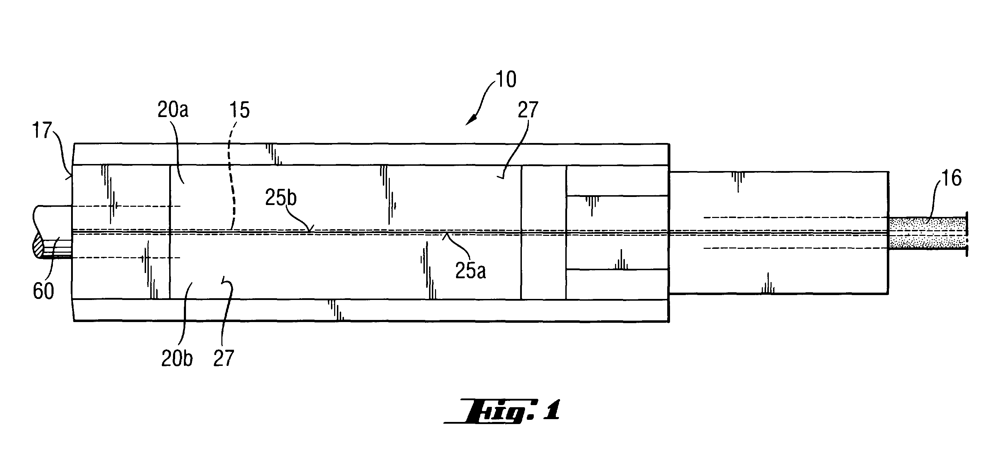

- Fig. 1: shows a side view of the ferrule according to the invention.
- Fig. 2: shows an end view of the ferrule according to the invention.
- Fig. 3: shows a perspective view of the ferrule guide plate according to this invention.
- Fig. 4: shows a blow-up view of the sealing lip of the invention
- Figs. 5a-c: illustrate the injection moulding process by which the ferrule of the invention is manufactured.
- Figs. 6a-b: show the optical fibre connector set in which the ferrule of the invention is used.

### Detailed Description of the Invention

Fig. I shows a ferrule 10 or a conductor guiding device according to this invention for optical fibres 15 or other signal transmission lines such as an electrical signal wire. The ferrule 10 is made from an upper guide plate 20a and a lower guide plate 20b and has an end face 17. The upper guide plate 20a has a top surface 25a which on assembly of the ferrule 10 is placed adjacent to a top surface 25b of the lower guide plate 20b. The top surfaces 25a and 25b are not directly in contact except by means of sealing lips 40 as will be explained later. The upper guide plate 20a and the lower guide plate 20b have side edges 27. The upper guide plate 20a and the lower guide plate 20b are manufactured in the preferred embodiment of the invention by plastic injection moulding techniques as described later. The upper guide plate 20a and the lower guide plate 20b could also be manufactured from silicon or another material by an etch process using techniques known in the art. Possible plastic materials for manufacture of the ferrule 10 include polymer materials such as a liquid crystalline polymer (LCP), for example LCP Vectra A 625, Vectra A 530 or LCP Vectra C 950, poly(butylene terephthalate) (PBT), such as Celanex 2000-3, polyoxymethylene (POM), such as Ultraform Z 23200003, poly(phenylene ether) (PPE), such as Luranyl Kr 2451/1, poly(phenylene sulfide) (PPS), such as Ryton BR 102 or Ryton EXP 144, poly(ether sulfone) (PES), such as Ultrason KR 4110, poly(ether imide) (PEI), such as Ultem CRS 5001 or Ultem 1010 R, poly(ether ether ketone) (PEEK), such as Victrex 151G, or polyimide, such as Aurum PL 450 C. Blends or modifications of the plastic materials may be used.

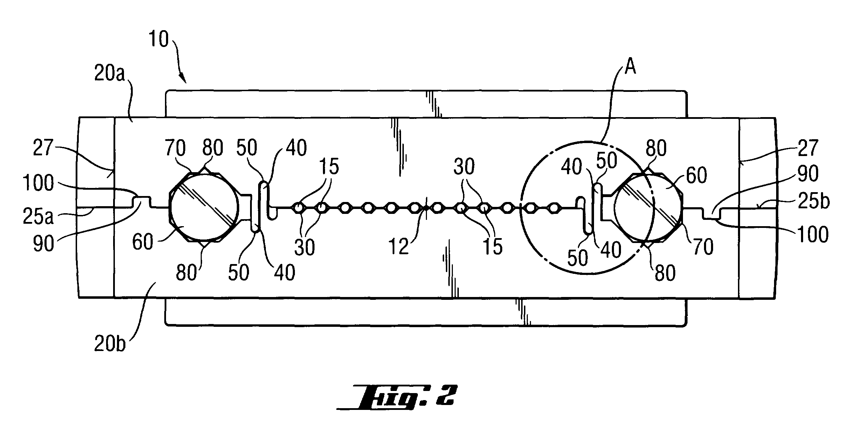

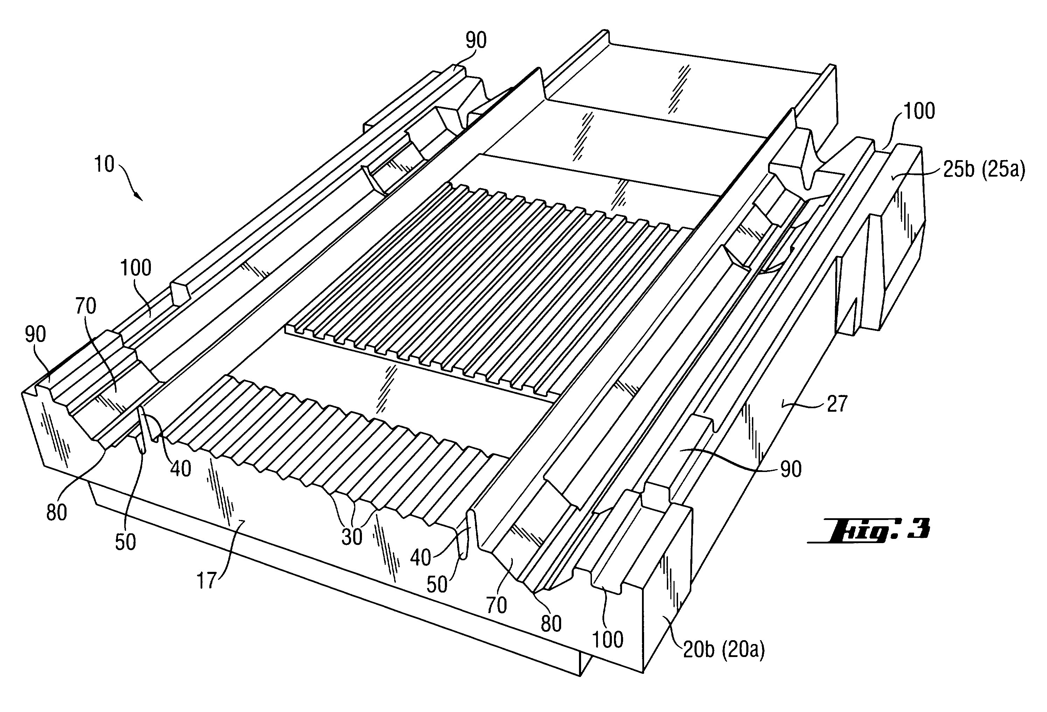

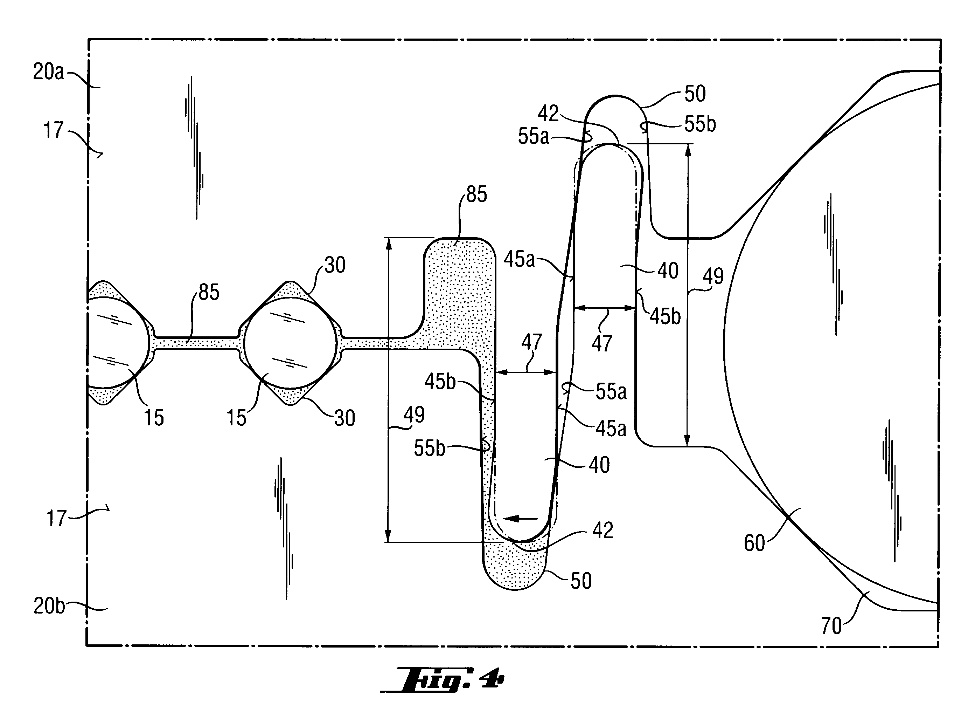

The construction of the upper guide plate 20a and the lower guide plate 20b will now be described in connection with Figs. 2 and 3 of the invention in which like reference numerals represent like elements. Fig. 2 shows an end view of the ferrule 10 of the invention. It can be seen from this figure that the upper guide plate 20a and the lower guide plate 20b of the invention are rotationally symmetrical about a rotational axis of symmetry 12 situated in the centre of the assembled ferrule 10 between the upper guide plate 20a and the lower guide plate 20b. Fig. 3 shows a perspective view of the ferrule 10 of the invention.

Each of the guide plates 20a, 20b has a plurality of fibre optic grooves 30 into which the optical fibres 15 are placed. In the preferred embodiment of the invention, the fibre optic grooves 30 are shown as having a v-shape, however, other shapes are conceivable. In the depicted ferrule 10, twelve fibre optic grooves 30 are shown to accept twelve optical fibres 15. This is in accordance with European Standard EN 186240 from 1994 for the MT fibre optic connector. However, a different number of fibre optic grooves 30 could be used without detracting from the principle of the invention. It should be noted, however, that in order to preserve the symmetry of the upper guide plate 20a with the lower guide plate 20b, an even number of fibre optic grooves 30 must be provided and, indeed, this is specified by the European Standard EN 186240.

On one side of the plurality of fibre optic grooves 30, a sealing lip 40 is provided and on the other side of the plurality of fibre optic grooves 30, a corresponding sealing groove 50 is provided. The sealing lip 40 has a tip 42, side walls 45a, 45b, a width 47 and a height 49. The sealing groove 50 has groove side walls 55a, 55b. As can be clearly seen from Fig. 2, the sealing lip 40 and the sealing groove 50 are matched such that when the top surface 25a of the upper guide plate 20a is placed in contact with a top surface 25b of the lower guide plate 20b, the sealing lip 40 of the upper guide plate 20a fits into the corresponding deep grove 50 of the lower guide plate 25b. Similarly the sealing lip 40 of the lower guide plate 20b fits into the corresponding deep groove 50 of the upper guide plate 20a.

Near both side edges 27 of the upper guide plate 20a and near both side edges 27 of the lower guide plate 20b, identical pin grooves 70 are constructed to accept guide pins 60 when two ferrules 10 are placed together. The pin grooves 70 are provided at their bottom with an indent 80 whose purpose is to aid in locating the position of the guide pin 60 within the pin groove 70 on assembly of the upper guide plate 20a with the lower guide plate 20b. Between one of the side edges 27 of the upper guide plate 20a and one of the pin grooves 70, a projection 90 is formed on the upper surface 25. Between the other of the side edges 27 and the other of the pin grooves 70, a receptacle 100 is formed. The projection 90 and the receptacle 100 are matched with each other such that on assembly of the ferrule 10 the projection 90 of the upper guide plate 20a is accepted by the receptacle 100 of the lower guide plate 20b and similarly the projection 90 of the lower guide plate 20b is accepted by the receptacle 100 of the upper guide plate 20a. The projection 90 and the receptacle 100 serve to align the upper guide plate 20a with the lower guide plate 20b on assembly of the ferrule 10.

The ferrule 10 is assembled by placing an adhesive 85 on the surface of the lower guide plate 20b. The optical fibres or other signal transmission lines 15 are placed in the fibre optic grooves 30 of the lower guide plate 20b. The upper guide plate 20a is then placed on the lower guide plate 20a such that the projections 90 matches up with the corresponding receptacles 100 and the sealing lips 40 match with the corresponding sealing grooves 50. The adjacent surfaces of the upper guide plate 20a and of the lower guide plate 20b do not touch each other over their whole area. The only point of contact is from the co-operation of the sealing lip 40 and the sealing groove 50.

The effect of the co-operation of the sealing lips 40 and the sealing grooves 50 is to create an additional space within the ferrule 10 into which the adhesive 85 is placed to bind the optical fibres 15 within the ferrule 10 and the upper guide plate 20a to the lower guide plate 20b. The sealing lips 40 and the sealing grooves 50 co-operate to ensure that no adhesive leaks into the area of the pin groove 70. A number of adhesives can be used in the ferrule 10. Examples are cyanacrylate such as Loctite 401 and Loctite 480, polyimide such as Epo-Tek 390, one component epoxy such as Epo-Tek 353 ND-frozen, two component epoxy such as TRA-BOND F123, Epo-Tek 353ND, Epo-Tek 353ND-T, Epo-Tek 301, Epo-Tek 302-3M, Epo-Tek 354, Epo-Tek 360, an ultra-violet light curable adhesive such as Tra-Bond F196, Master Bond UV-15-7, UV 15-7DC, Vitralit 6102, NEA 121, an ultra-violet light curable cationic adhesive such as Vitralit 1722, Vitralit 1731, Delo Katiobond 4552, Delo Katiobond 4557, Delo Katiobond 4594, or a hot melt adhesive such as Bostik Supergrip 2000-9810.

After assembly of the ferrule 10, the end face 17 of the ferrule 10 can be polished, for example, in accordance with the techniques described in applicant's co-pending European Patent Application No EP 96 118 370.

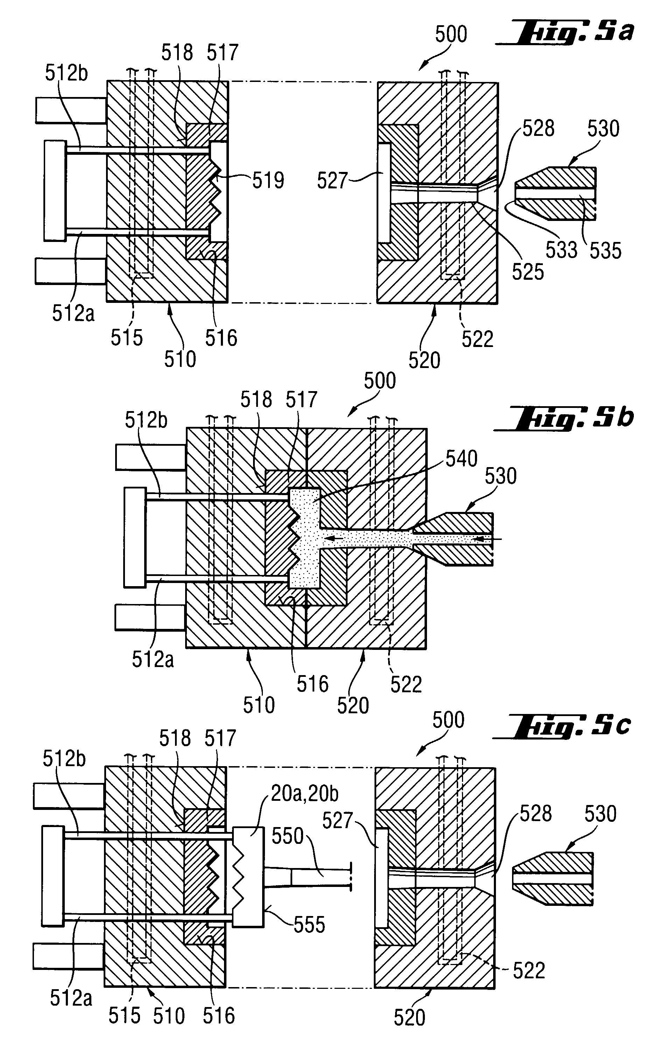

Fig. 4 shows a blow-up view of the area marked A on Fig. 2 of the end face 17 of the ferrule 10 on assembly and allows a better understanding of the sealing principle. It will be observed from Fig. 4 that the tips 42 of the sealing lips 40 do not exactly match the bottoms 52 of the sealing grooves 50. Rather on assembly of the ferrule 10, the tip 42 of the sealing lip 40 hits one of the groove side walls 55 of the sealing groove 50. The width 47 of the sealing lip 40 is substantially smaller than the sealing lip height 49 of the sealing lip 40. Thus the sealing lips 40 can bend in the direction shown by the arrows in Fig. 4 such that the sealing lip tips 42 are in direct contact with the groove side walls 55 and thus form a seal for the adhesive when it is inserted into the space between the upper guide plate 20a and the lower guide plate 20b.

Fig. 4 shows the dimensions of the sealing lip 40 and the sealing groove 50 in one embodiment of the invention. These dimensions are illustrative of one advantages embodiment of the invention in which the orthogonal or side forces between the side walls 45a, 45b of the sealing lip 40 and the groove side wall 55a of the sealing groove 50 are minimised. Other dimensions could be used and the dimensions given here are not intended to be limiting. It is seen that the side walls 45a, 45b of the sealing lip 40 have an angle of 1.0° from the normal to the top surface 25 whilst the groove side wall 55a adjacent to the sealing lip 40 has an angle of 7.0° from the normal to the top surface 25 and the other groove side wall 55b is normal to the top surface 25. The tip 42 of the sealing lip 40 is rounded as is the bottom 52 of the sealing groove 50 to allow easy assembly of the ferrule 10.

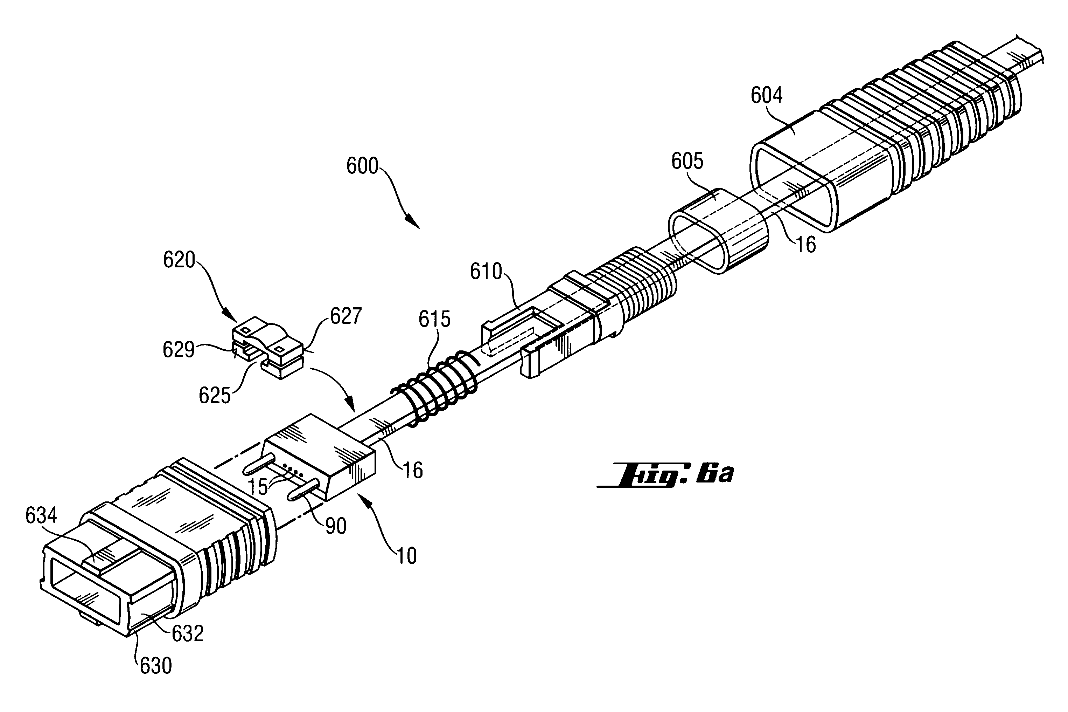

The ferrule 10 is made in two halves using an injection moulding method as is shown in Figs. 5a to Fig. 5c. This comprises a mould 500 with an ejector side 510 and an injection side 520. The ejector side 510 has ejector pins 512a and 512b which are inserted through the ejector side 510 to a mould insert cavity 516 which accepts a first mould insert 517 having a back side 518 and a front side 519. The ejector side 510 furthermore contains heating elements 515. The injection side 520 has heating elements 522 and a passageway 525 through the injection side 520 leading to a second mould insert 527. An opening 528 to the passageway 525 accepts an end 533 of a barrel 530 for injecting the plastic into the mould 500. The barrel 530 has a passageway 535 through which molten plastic is injected to the end 533, into the mould 500 and consequently pressed into the mould cavity 516.

Fig. 5a shows the mould 500 prior to commencement of the injection moulding process. The first mould insert 517 for one of the upper guide plate 20a or the lower guide plate 20b of the ferrule 10 is inserted into the mould insert cavity 516. The ejector pins 512a, 512b are so positioned that they pass through the back side 518 of the mould insert 517 to the front side 519 of the first mould insert 517. Their function will become clearer later. The ejector side 510 and the injection side 520 are brought together as shown in Fig. 5b and the end 533 of the barrel 530 is placed in the opening 528 of the passageway 525. As is depicted by the arrows in the diagram, molten plastic is injected through the passageway 535 of the barrel 530 into the passageway 525 of the injection side 520 and thus pressed into the cavity 540 formed between the first mould insert 517 and a second mould 527.

Ventilation channels which are not shown on these figures allow escape of the air from the cavity 540 during the moulding process. The ejector side 510 and the injection side 520 are heated during the moulding process by means of the heating elements 515 and 522 respectively. The end 533 of the barrel 530 is subsequently withdrawn from opening 528 of the passageway 525.

After cooling and solidifying of the plastic within the cavity 540, the ejector side 510 and the injection side 520 are separated from each other as shown in Fig. 5c. The guide plate 20a, 20b thus moulded is removed from the mould insert cavity 516 by means of the ejector pins 512a, 512b and then removed from the ejector pins 512a, 512b. The stub 550 attached to the bottom 555 of the guide plate 20a, 20b is removed. Using the same first mould insert 517 and the matching upper guide plate 20a and lower guide plate 20b of a ferrule 10 can be constructed.

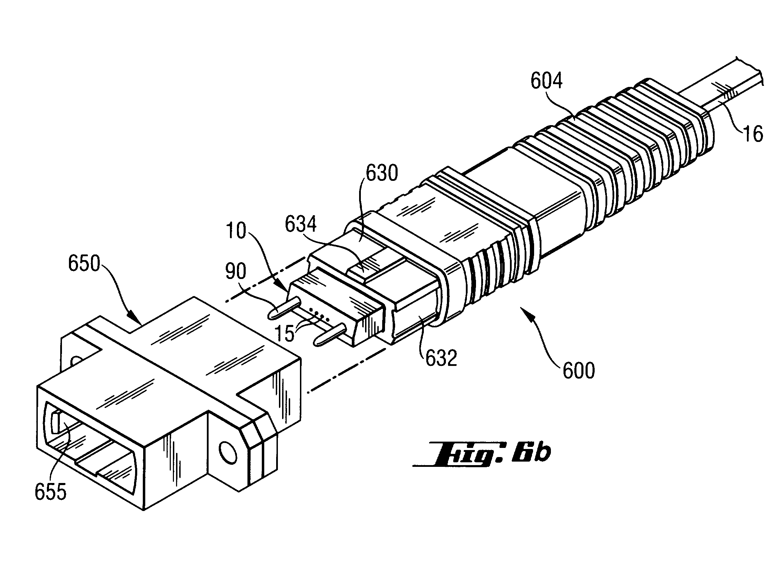

The ferrule 10 of the invention is used, for example, in a connection system 600 such as shown diagrammatically in Figs. 6a and 6b and which is obtainable from US Conec, Hickory, North Carolina, US, under the name MTP Push-on connector. Fig. 6 shows only one half of the connection system 600. An adapter 650 is used to connect two halves of the connection system 600 together. Each half of the connection system 600 comprises an end piece 604, a crimp ring 605, a spring push 610, a spring 615, a pin clamp 620, a coupling element 630. The pin clamp 620 has a rear end 627 and a front end 629 as well as an opening 625 through which the fibre optic cable 15 passes. The ferrule 10 is placed in front of the pin clamp 620 such that the fibre optic cable 15 extends from the rear end 627, i.e. the end facing the spring push 610. The ferrule 10 is surrounded and guided by the coupling element 630 and the front facet 40 emerges from the front end of the coupling element 630. The spring 615, the spring push 610 are slid over the fibre optic cable 16 and an outer jacket of the cable 16 together with a strength member in the jacket are clamped in place by means of the crimp ring 605.. The end piece 604 and the coupling element 630 are then assembled over the construction. The coupling element 630 includes a key 634 for ensuring that the one half of the connection system 600 is inserted correctly in the adapter 650. The coupling element 630 further includes a depression 632 which co-operates with a latch 655 on the adapted to hold the half of the connection system in the adapter 650

Fig. 6b shows one half of the connection system 600 mounted together with the adapter 650. The ferrules 10 in both halves of the connection system 600 are mounted such that when the halves of the connection system 600 are held in the adapter 650 the respective front facets 17 of the ferrule 10 abut each other. The spring 615 applies sufficient force to the ferrule 10 such that the ferrule 10 is compressed and the front faces of the optical fibres 15 are in direct contact with each other.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. Guiding device (10) having upper and lower guide plates (20a, 20b),
said guide plates (20a, 20b) each having a top surface (25a, 25b) and comprising
- a plurality of transmission line grooves (30) in the top surface for acceptance of signal transmission lines
- at least one sealing lip (40) projecting from the top surface, and
- at least one sealing groove (50) in the top surface separated from the at least one sealing lip (40) by the plurality of transmission line grooves (30),
wherein said guide plates (20a, 20b) are matched when the top surfaces of the guide plates (20a, 20b) are placed adjacent to one another, such that the plurality of grooves (30) in the upper guide plate (20a) aligns with the plurality of grooves (30) in the bottom guide plate (20b), and
the at least one sealing lip (40) in one of said guide plates (20a, 20b) is accepted by the at least one sealing groove (50) in the other of said guide plates (20a,20b).

2. Guiding device (10) according to claim I whereby the upper guide plates (20a, 20b) each have two sealing lips (40) and two sealing grooves (50) separated by the plurality of transmission line grooves (30).

3. Guiding device (10) according to claim 1 wherein the guide plates (20a, 20b) further include a guiding pin groove (70) in the top surface (25a, 25b).

4. Guiding device (10) according to claim 3 wherein the guiding pin groove (70) each have an indent (80) at their deepest point.

5. Guiding device (10) according to claim 1 wherein the guide plates (20a, 20b) further include a projection (90) and a receptacle (100), the projection (90) and the receptacle (100) being matched such that they align with each other when the top surfaces (25a, 25b) of the guide plates (20a, 20b) are placed adjacent to one another.

6. Guiding device (10) according to claim 2 wherein the sealing lips (40) are adjacent to the sealing groove (50).

7. Guiding device (10) according to claim I wherein the height (49) of the sealing lip (40) is at least three times the width (47) of the sealing lip (40).

8. Guiding device (10) according to claim 1 wherein the sealing lip (40) has a first and second lip side wall (45a, 45b), each side wall (45a, 45b) being at an angle of between 0.5° and 5° to the normal of the top surface (25a, 25b) of the guide plate (20a, 20b).

9. Guiding device (10) according to claim 1 wherein the sealing groove (50) have a first and second groove side wall (55a, 55b), the first side wall (55a) being adjacent to the sealing lip (40) and having an angle between 3° and 12° to the normal of the top surface of the guide plate (20a, 20b).

10. Guiding device (10) according to claim I wherein said upper guide plate (20a) is identical to said lower guide plate (20b).

11. Optical fibre connection system comprising:
a plurality of optical fibres (15) placed in the transmission line grooves (30),
the guiding device (10) of one of claims I to 10, wherein the optical fibres are sealed between the guide plate members (20a, 20b) by an adhesive (85).
